# EUROPÄISCHE PATENTANMELDUNG

(11) **EP 1 320 278 A1**
(43) Veröffentlichungstag der Anmeldung: **18.06.2003**
(21) Anmeldenummer: 01811207.8
(22) Anmeldetag: 11.12.2001
(51) Int. Cl.: H04Q 11/04, H04M 3/56

(54) **Vorrichtung zur Verknüpfung PCM-kodierter Signale**

(71) Anmelder: ABB Schweiz AG, 5400 Baden (CH)
(72) Erfinder: Amft, Oliver, 4310 Rheinfelden (CH)
(74) Vertreter: ABB Patent Attorneys

(57) **Zusammenfassung**

Um zwei oder mehr PCM-kodierte Signale P(X1), P(X2) zu verknüpfen, werden diese einer asynchronen Logikschaltung (1) zugeführt, die ein PCM-kodiertes Signal P(Y) erzeugt. Dabei gilt, dass Y = X1+X2 ist, wobei X1, X2 und Y die entsprechenden dekodierten Werte sind. Durch diese Verknüpfungsregel und durch Verwendung einer asynchronen, einfach optimierbaren Logikschaltung wird es möglich, PCM-kodierte Signale mit geringem Aufwand in Echtzeit und ohne Qualitätsverluste zu verknüpfen.

## Beschreibung

### Technisches Gebiet

Die Erfindung betrifft eine Vorrichtung zur Verknüpfung PCM-kodierter Signale sowie ein Verfahren zu deren Herstellung gemäss Oberbegriff der unabhängigen Ansprüche.

### Stand der Technik

PCM-Kodierung ist ein Verfahren, welches es erlaubt, ein Signal (in der Regel ein Sprachsignal) in komprimierter Weise zu übertragen. Hierzu wird ein in digitalisierter Form vorliegendes, durch Signalwerte X beschriebenes Signal in PCM-kodierte Werte P(X) umgewandelt, wobei P(X) eine nichtlineare Kodierungsfunktion ist, welche Werte nahe bei Null besser auflöst als grosse Werte. Dabei kann die Zahl der Binärziffern reduziert werden. Die PCM-Kodierung ist international in zwei Formen ("A law" und "Mu law") standartisiert, siehe ITU-T recommendation G.732 und G.711.

In einigen Anwendungen, z.B. bei der Übermittlung telefonischer Konferenzgespräche, müssen mehrere PCM-Kodierte Werte P(X1), P(X2),... in Echtzeit zu einem einzigen Signal P(Y) verknüpft werden. Hierzu wird in der Regel das Ausgangssignal P(Y) gleich dem Stärkeren der beiden Signale gesetzt, da die entsprechende Operation schnell ausgeführt werden kann. Diese Lösung vermag aus Qualitätsgründen jedoch oftmals nicht zu befriedigen. Standardmässig werden deshalb, wie beispielsweise in "Philips Telefonzentrale SOPHO iS3000 Serie SOPHO Call@Net (SSW810) Manual, p. 313 (Schematic Function of conference parties)" offenbart, die Signale dekodiert, in Analogwerte umgewandelt, analog verknüpft, und sodann wieder digitalisiert und kodiert, was jedoch aufwändig ist.

### Darstellung der Erfindung

Es stellt sich deshalb die Aufgabe, eine Vorrichtung bereitzustellen, welche mehrere PCM-kodierte Signale in Echtzeit mit guter Qualität zu verknüpfen vermag.

Diese Aufgabe wird durch die Vorrichtung nach Anspruch 1 erfüllt. Erfindungsgemäss ist also eine Logikschaltung mit parallelen Eingängen für die PCM-kodierten Werte P(X1), P(X2),... und einem parallelen Ausgang für den PCM-kodierten Wert P(Y) vorgesehen. Die Logikschaltung ist so ausgestaltet, dass Y der Summe X1 + X2 + ... der Signale X1, X2, ... entspricht. Dadurch wird eine Verküpfung realisiert, wie sie bei einer analogen Addition der nicht kodierten Signale X1, X2, ... stattfindet, was die Qualität der Signale, insbesondere digitaler Daten, verbessert. Hierzu wird eine asynchrone digitale Logikschaltung verwendet, d.h. eine Schaltung, welche die mathematische Verknüpfung der PCM-kodierten Werte P(X1), P(X2),... zum Wert P(Y) in einer ungetakteten Logik durchführt. Dies erlaubt es, den Wert P(Y) in Echtzeit zu ermitteln.

Vorzugsweise ist die Logikschaltung eine Anordnung aus logischen Gattern, welche die Eingänge mit dem Ausgang verknüpft, da derartige Schaltungen sehr schnell arbeiten und deren Auslegung durch Eingabe der binären Abhängigkeit zwischen Eingangswerten und Ausgangswert in einfacher Weise berechnet werden kann. Insbesondere sind hierzu programmierbare Logikschaltkreise, wie z.B. ASICS, programmierbare Gate-Arrays, etc. geeignet, deren Verknüpfungen durch einen Programmierprozess festgelegt werden können.

Eine besonders effektive Implementierung wird erreicht, wenn die Logikschaltung zwar das Endresultat P(Y) berechnet, aber weder intern noch an Abgriffen gewisse Zwischenrsultate erzeugt, welche bei einer naiven Realisierung an sich nötig scheinen. Solche Zwischenresultate sind insbesondere die dekodierten Werte X1, X2, ... oder die Summe Y = X1 + X2 + ... Wie es sich zeigt, kann das Endresultat direkt aus den Eingangswerten erzeugt werden, ohne dass alle diese Zwischenresultate explizit erzeugt werden.

In einer bevorzugten Ausführungsform der Erfindung ist einem codierten Wert, dessen Bits, ohne Betrachtung eines Vorzeichenbits, alle logisch null sind, ein Signalwert zugeordnet, dessen Bits, ohne Betrachtung eines Vorzeichenbits, ebenfalls alle null sind. Dies hat den Vorteil, dass die Logikschaltung gemäss der Erfindung digitale Daten transparent weitergibt und gleichzeitig codierte Sprachdaten korrekt addiert. Es ist also, wenn genau einer der Eingangswerte P(X1), P(X2),... nicht gleich Null ist, der Ausgangswert P(Y) bitweise genau gleich diesem Eingangswert.

Vorzugsweise wird die Logikschaltung hergestellt, indem ein Boolean'sches Gleichungssystem mit Gleichungen, die die Abhängigkeit des Werts P(Y) und den Werten P(X1), P(X2),... beschreiben, in einem Logiksynthese-Algorithmus (logic synthesis algorithm) verarbeitet wird. Logiksynthese-Algorithmen sind Algorithmen, welche z.B. ausgehend von Boolean'schen Gleichungssystemen eine "optimierte" Anordnung aus asynchron arbeitenden logischen Gattern erzeugen, wobei die Optimierung z.B. im Hinblick auf minimale Verzögerungszeit oder minimalen Gatterbedarf durchgeführt werden kann. Dieses Herstellungsverfahren nützt den Umstand aus, dass Dekodierung, Summierung und erneute Kodierung in einem einzigen Schritt durchgeführt werden und profitiert von Schaltungsvereinfachungen, die sich hieraus ergeben.

### Kurze Beschreibung der Zeichnung

Weitere Ausgestaltungen, Vorteile und Anwendungen der Erfindung ergeben sich aus den abhängigen Ansprüchen und aus der nun folgenden Beschreibung anhand der Figuren.
- Figur 1: zeigt ein Blockdiagramm einer möglichen Ausführung der Vorrichtung.
- Figur 2: zeigt eine Tabelle zur Beschreibung einer gemäss der Erfindung modifizierten "A-law"-Codierung.

### Wege zur Ausführung der Erfindung

Wie eingangs erwähnt befasst sich die vorliegende Erfindung mit der Verknüpfung PCM-kodierter Signale. Unter PCM-Kodierung wird dabei die in ITU-TG.711 beschriebene Kodierung verstanden, welche gemäss "A-law" oder "Mu-law" stattfinden kann. Weitere verwendbare Codierungsstandards gehören zur Klasse von "Adaptive Differential PCM", gemäss beispielsweise ITU-TG.721. Dabei wird über eine nicht-lineare Kodierungsfunktion ein Wert von 13 bzw. 14 Bit Breite in einen Wert von 8 Bit umgewandelt. Die PCM-Kodierung ist dem Fachmann bekannt und muss hier nicht näher beschrieben werden.

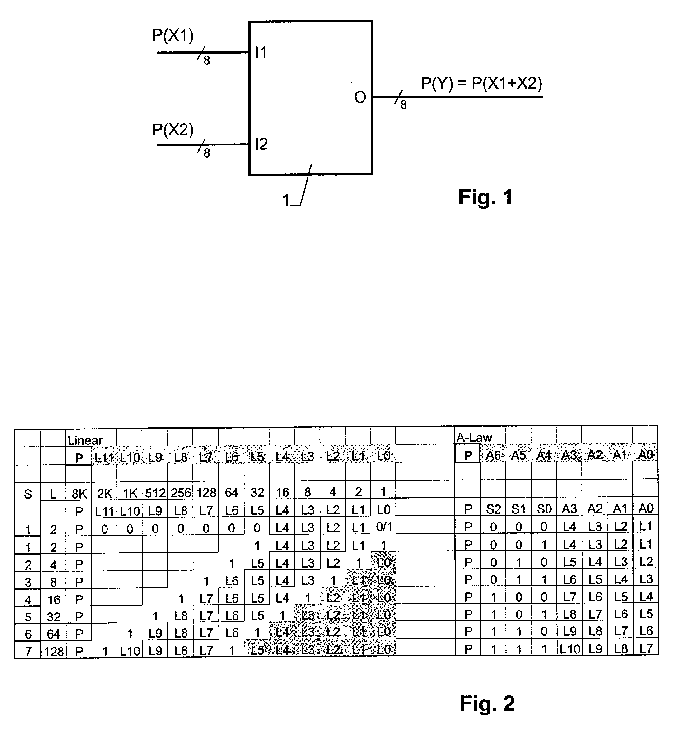

Wie in Fig. 1 dargestellt, besitzt die erfindungsgemässe Vorrichtung zwei (oder gegebenenfalls mehr) Eingänge I1, I2. Jeder dieser Eingänge hat eine Breite von 8 Bit und für einen PCM-kodierten Wert P(X1) bzw. P(X2). Dabei beschreibt P die verwendete PCM-Kodierungsfunktion.

Die PCM-kodierten Werte P(X1) und P(X2) werden in einer Logikschaltung 1 verknüpft und an einem Ausgang O derselben als PCM-kodierter Wert P(Y) ausgegeben. Dabei ist Y die Summe aller Eingangs-Signalwerte, d.h. Y = X1 + X2 bei zwei Eingängen.

Mit anderen Worten werden also, rein mathematisch gesehen, die PCM-kodierten Werte P(X1) und P(X2) dekodiert, die so erhaltenen Werte X1, X2 werden addiert, und die Summe Y wird kodiert. Die Logikschaltung 1 ist jedoch, wie im Folgenden beschrieben, so ausgestaltet, dass die Zwischenresultate X1, X2 und X1 + X2 nicht explizit ermittelt werden.

Die Logikschaltung 1 besitzt eine Vielzahl logischer Gatter, welche asynchron betrieben werden, d.h. der Signalfluss durch die Logikschaltung benötigt kein Taktsignal sondern breitet sich, hauptsächlich limitiert durch die Gattergeschwindigkeit und Laufzeitverzögerungen, von den Eingängen zum Ausgang fort. Eine derartige Schaltung besitzt, je nach verwendeter Technologie, Antwortzeiten von 60 ns bis unter 30 oder 25 ns, so dass eine Echtzeitverarbeitung auch dann noch möglich ist, wenn vor und nach der Schaltung weitere zeitkritische Operationen stattfinden.

Vorzugsweise ist die Logikschaltung 1 als programmierbare Logikschaltung ausgestaltet, deren Verknüpfungslogik in einem festen oder änderbaren Speicher festgelegt ist. Beispielsweise kann es sich um ein programmierbares Gate-Array (PGA) handeln.

Um die Logikschaltung auszulegen, wird zuerst ein System aus Boolean'schen Gleichungen erstellt, dass die Abhängigkeit der Bits des Werts P(Y) von den Bits der Werte P(X1), P(X2) beschreibt. Dieses kann in einer Vielzahl von Arten formuliert werden.

Beispielsweise kann ein System expliziter Gleichungen für jedes Bit PY(i) von P(Y) in Funktion der 16 Bits PX1(0) ... PX1(7) und PX2(0) ... PX2(7) aufgestellt werden.

Alternativ können z.B. auch Gleichungssysteme verwendet werden, welche Gleichungen umfassen zur Abhängigkeit der Bits PY(i) von den Bits Y(i) der Summe Y, Gleichungen zur Abhängigkeit der Bits Y(i) von den Bits X1(i), X2(i) der Zwischenresultate X1, X2 und Gleichungen zur Abhängigkeit der Bits X1(i) und X2(i) von den Bits PX1(0) ... PX1(7) und PX2(0) ... PX2(7). Bei den Gleichungen, die die Abhängigkeit der Bits Y(i) von den Bits X1(i), X2(i) beschreiben, ist darauf zu achten, dass ein Überlauf des Werts Y bei grossen Werten X1, X2 durch geeignete Begrenzung von Y vermieden wird.

Das Gleichungssystem kann auch in Form von binären Zuordnungstabellen bereitgestellt werden, welche jedem möglichen uncodierten Bitmuster das entsprechende codierte Bitmuster eineindeutig zuordnen.

Eine kompakte tabellarische Beschreibung der Zuordnung für die "A-law"-Codierung gemäss ITU-TG.711 ist in "Digital telephony" John C. Bellamy, Chichester, John Wiley and Sons, 2000, Appendix B.2, Seiten 583-586 gegeben. Eine im Wesentlichen gleiche Tabelle gemäss Figur 2 wird in der vorliegenden Erfindung verwendet. Darin bezeichnet P ein Vorzeichenbit, bezeichnen L0-L11 Bits eines nicht codierten (linearen) Wertes, und bezeichnen A0-A6 Bits eines "A-law"-codierten Wertes. Jedem nicht codierten Wert ist gemäss der linken Seite der Tabelle aufgrund des höchsten von Null verschiedenen Bits eine Zeile der Tabelle zugeordnet. In der mit S bezeichneten Spalte ganz links ist eine entsprechende Segmentnummer angegeben. In der gleichen Zeile sind auf der rechten Seite der Tabelle führende Bits S0-S2 des entsprechenden PCMcodierten Wertes angegeben. Die restlichen Bits des PCMcodierten Wertes sind gleich den angegebenen Bits des uncodierten Wertes.

Im Gegensatz zur standarmässigen Codierung gemäss ITU-TG.711 weist die Tabelle in der ersten Zeile für das erste Segment und in der Spalte für das niedrigste Bit L0 des nichtcodierten Wertes eine logische Null anstelle einer Eins auf, falls der codierte Wert gleich einem vordefinierten Nullelement oder Neutralelement ist. Das Nullelement besteht beispielsweise aus dem Vorzeichenbit P, gefolgt von lauter Nullen. Beim vorliegenden Beispiel wird angenommen, dass das Vorzeichenbit beim Nullelement eins ist, das Nullelement also 10000000 ist. In einer anderen Implementation ist das Nullelement 00000000. Bei der Dekodierung wird beim Vorliegen des Nullelements das niedrigste Bit L0 des nichtcodierten Wertes gleich Null gesetzt. Dies hat folgende vorteilhafte Wirkung: Falls das codierte Signal P(X1) gleich dem Nullelement ist, so sind alle Bits des entsprechenden nichtcodierten Wertes X1 gleich Null. Allgemein gesprochen wird also einem Nullelement des codierten Signals ein Nullelement des nichtcodierten Signals zugeordnet. Dieses Nullelement des nichtcodierten Signals ist ein Neutralelement bezüglich der Addition nichtcodierter Signale, da es bei Addition mit einem anderen nichtcodierten Signal dieses nicht verändert. In einer anderen Ausführungsform der Erfindung weist das Nullelement des nichtcodierten Signals auch von Null verschiedene Bits auf, und ist die Additionsschaltung entsprechend anders ausgeführt. Die Summe von X1 mit einem beliebigen zweiten Wert X2 verändert diesen zweiten Wert X2 also nicht, und nach der Codierung ergibt sich als Ausgang P(Y)=P(X2). Dies ist im Gegensatz zum Stand der Technik: Falls dort P(X1) Null ist, so weist X1 als niedrigstes Bit L0 eine Eins auf. Die Addition mit dem zweiten Wert X2 verändert diesen somit, und nach der Codierung ist der codierte Ausgangswert P(Y) nicht gleich dem codierten Eingangswert P(X2).

Diese Änderung eines Signals durch ein anderes Signal mit Wert Null ist bei der Übertragung von Sprachsignalen nicht hörbar. Bei der Übertragung von Daten ist sie aber nicht zulässig. Die erfindungsgemässe Vorrichtung erlaubt dagegen, solange an nur einem Eingang digitale Daten vorliegen, diese transparent weiterzugeben. Gleichzeitig erlaubt die Erfindung, codierte Sprachdaten korrekt zu addieren. Damit ist die Vorrichtung in einem digitalen "cross-connect" zur Übertragung von Telefoniesignalen wie auch Datensignalem einsetzbar.

Der tabellarischen Beschreibung von Figur 2 entsprechen die folgenden logischen Gleichungen. Der folgende erste Satz von Gleichungen gibt für jedes einzelne Bit eines codierten Wertes an, wie es aus den Bits des nicht codierten oder linearen Wertes berechnet wird. Es bezeichnen NL(0) bis NL(11) jeweils negierte Bits L(0) bis L(11) des nicht codierten Wertes.
- Bit: Logische Gleichung
- 7: P
- 6: (L(11) xor (NL(11) and L(10)) xor (NL(11) and NL(10) and L(9)) xor (NL(11) and NL(10) and NL(9) and L(8)))
- 5: (L(11) xor (NL(11) and L(10)) xor (NL(11) and NL(10) and NL(9) and NL(8) and L(7)) xor (NL(11) and NL(10) and NL(9) and NL(8) and NL(7) and L(6)))
- 4: (L(11) xor (NL(11) and NL(10) and L(9)) xor (NL(11) and NL(10) and NL(9) and NL(8) and L(7)) xor (NL(11) and NL(10) and NL(9) and NL(8) and NL(7) and NL(6) and L(5)))
- 3: ((L(11) and L(10)) xor (NL(11) and L(10) and L(9)) xor (NL(11) and NL(10) and L(9) and L(8)) xor (NL(11) and NL(10) and NL(9) and L(8) and L(7)) xor (NL(11) and NL(10) and NL(9) and NL(8) and L(7) and L(6)) xor (NL(11) and NL(10) and NL(9) and NL(8) and NL(7) and L(6) and L(5)) xor (NL(11) and NL(10) and NL(9) and NL(8) and NL(7) and NL(6) and L(4)))
- 2: ((L(11) and L(9)) xor (NL(11) and L(10) and L(8)) xor (NL(11) and NL(10) and L(9) and L(7)) xor (NL(11) and NL(10) and NL(9) and L(8) and L(6)) xor (NL(11) and NL(10) and NL(9) and NL(8) and L(7) and L(5)) xor (NL(11) and NL(10) and NL(9) and NL(8) and NL(7) and L(6) and L(4)) xor (NL(11) and NL(10) and NL(9) and NL(8) and NL(7) and NL(6) and L(3)))
- 1: ((L(11) and L(8)) xor (NL(11) and L(10) and L(7)) xor (NL(11) and NL(10) and L(9) and L(6)) xor (NL(11) and NL(10) and NL(9) and L(8) and L(5)) xor (NL(11) and NL(10) and NL(9) and NL(8) and L(7) and L(4)) xor (NL(11) and NL(10) and NL(9) and NL(8) and NL(7) and L(6) and L(3)) xor (NL(11) and NL(10) and NL(9) and NL(8) and NL(7) and NL(6) and L(2)))
- 0: ((L(11) and L(7)) xor (NL(11) and L(10) and L(6)) xor (NL(11) and NL(10) and L(9) and L(5)) xor (NL(11) and NL(10) and NL(9) and L(8) and L(4)) xor (NL(11) and NL(10) and NL(9) and NL(8) and L(7) and L(3)) xor (NL(11) and NL(10) and NL(9) and NL(8) and NL(7) and L(6) and L(2)) xor (NL(11) and NL(10) and NL(9) and NL(8) and NL(7) and NL(6) and L(1)))

Der folgende zweite Satz von Gleichungen gibt für jedes einzelne Bit eines linearen Wertes an, wie es aus den Bits des codierten Wertes berechnet wird. Es bezeichnen NS(0)-NS(2) jeweils negierte Segmentbits S(0)-S(2) des codierten Wertes. NP bezeichnet das negierte Vorzeichenbit:
- Bit: Logische Gleichung
- 12: P
- 11: (S(2) and S(1) and S(0))
- 10: ((S(2) and S(1) and NS(0)) xor (S(2) and S(1) and S(0) and A(3)))
- 9: ((S(2) and NS(1) and S(0)) xor (S(2) and S(1) and S(0) and A(2)) xor (S(2) and S(1) and NS(0) and A(3)))
- 8: ((S(2) and NS(1) and NS(0)) xor (S(2) and S(1) and S(0) and A(1)) xor (S(2) and S(1) and NS(0) and A(2)) xor (S(2) and NS(1) and S(0) and A(3)))
- 7: ((NS(2) and S(1) and S(0)) xor (S(2) and S(1) and S(0) and A(0)) xor (S(2) and S(1) and NS(0) and A(1)) xor (S(2) and NS(1) and S(0) and A(2)) xor (S(2) and NS(1) and NS(0) and A(3)))
- 6: ((NS(2) and S(1) and NS(0)) xor (S(2) and S(1) and NS(0) and A(0)) xor (S(2) and NS(1) and S(0) and A(1)) xor (S(2) and NS(1) and NS(0) and A(2)) xor (NS(2) and S(1) and S(0) and A(3)) xor (S(2) and S(1) and S(0)))
- 5: ((NS(2) and NS(1) and S(0)) xor (S(2) and NS(1) and S(0) and A(0)) xor (S(2) and NS(1) and NS(0) and A(1)) xor (NS(2) and S(1) and S(0) and A(2)) xor (NS(2) and S(1) and NS(0) and A(3)) xor (S(2) and S(1) and NS(0)))
- 4: ((S(2) and NS(1) and NS(0) and A(0)) xor (NS(2) and S(1) and S(0) and A(1)) xor (NS(2) and S(1) and NS(0) and A(2)) xor (NS(2) and NS(1) and A(3)) xor (S(2) andNS(1) and S(0)))
- 3: ((NS(2) and S(1) and S(0) and A(0)) xor (NS(2) and S(1) and NS(0) and A(1)) xor (NS(2) and NS(1) and A(2)) xor (S(2) and NS(1) and NS(0)))
- 2: ((NS(2) and S(1) and NS(0) and A(0)) xor (NS(2) and NS(1) and A(1)) xor (NS(2) and S(1) and S(0)))
- 1: ((NS(2) and NS(1) and A(0)) xor (NS(2) and S(1) and NS(0)))
- 0: ((NS(2) and NS(1) and NS(0) and NP) xor (NS(2) and NS(1) and S(0))

Entsprechend der letzen Zeile wird in Fig. 2 in der ersten Zeile für das erste Segment und in der Spalte für das niedrigste Bit L0 dieses gleich Null gesetzt, falls als codierter Wert das Nullelement vorliegt.

Falls die standardmässige "A-law"-Codierung verwendet wird, lautet die letzte Zeile des zweiten Gleichungssatzes:
- 0: (NS(2) and NS(1))

Das Gleichungssystem wird einem Logiksynthese-Algorithmus zugeführt, der es im Hinblick auf eine gewünschte Zielgrösse (z.B. Minimierung der Gatterzahl oder der Verzögerungszeit) umwandelt und in eine Gatteranordnung umrechnet. Entsprechende System, die z.B. direkt die nötigen Programmierdaten für ein PGA liefern, sind dem Fachmann bekannt.

Dabei ist zu beachten, dass in einer so ausgelegten Schaltung die Zwischenresultate Y und X1, X2 unter Umständen nirgends abgegriffen werden können. Hierzu besteht auch keine Notwendigkeit. Vielmehr erlaubt der Verzicht auf eine Zugreifbarkeit dieser Zwischenresultate eine Optimierung der Schaltung.

Die Schaltung gemäss Fig. 1 besitzt zwei Eingänge für PCM-kodierte Signale P(X1) und P(X2). Es ist auch möglich, eine Schaltung mit einer grösseren Zahl von Eingängen bereitzustellen, wobei auch hier die Verknüpfung wieder in asynchroner Weise durchgeführt wird. In diesem Falle werden zwei oder mehr der Verknüpfungen gemäss Figur 1 miteinander kaskadiert und sind die Gleichungssysteme entsprechend durch weitere Eingangswerte zu ergänzen.

### Bezugszeichenliste

- 1:: Logikschaltung
- I1, I2:: Eingänge
- O:: Ausgang
- P:: PCM-Kodierungsfunktion
- PX1(i), PX2(i), PY(i):: Bits der PCM-kodierten Werte P(X1), P(X2), P(Y)
- X1, X2:: Signalwerte an den Eingängen
- X1(i), X2(i):: Bits der Signalwerte X1, X2
- Y:: Signalwert am Ausgang
- Y(i):: Bits des Signalwerts Y

## Patentansprüche

1. Vorrichtung zur Echtzeit-Verknüpfung mehrerer Signalwerte X1, X2, ..., welche in Form PCM-kodierter Werte P(X1), P(X2),... vorliegen, **gekennzeichnet durch** eine asynchrone digitale Logikschaltung (1) mit Eingängen (I1, I2...) für die PCM-kodierten Werte P(X1), P(X2),... und einem Ausgang (O) für einen PCM-kodierten Wert P(Y), wobei gilt, dass Y der Summe X1 + X2 + ... der Signalwerte X1, X2, ... entspricht.

2. Vorrichtung nach Anspruch 1, **dadurch gekennzeichnet, dass** die asynchrone digitale Logikschaltung (1) eine Anordnung aus logischen Gattern ist, welche die Eingänge mit dem Ausgang verknüpft.

3. Vorrichtung nach einem der vorangehenden Ansprüche, **dadurch gekennzeichnet, dass** die Logikschaltung (1) eine programmierbare Logikschaltung ist.

4. Vorrichtung nach einem der vorangehenden Ansprüche, **dadurch gekennzeichnet, dass** die Logikschaltung (1) die Signalwerte X1, X2,... und/oder die Summe Y = X1 + X2 + ... nicht erzeugt.

5. Vorrichtung nach einem der vorangehenden Ansprüche, **dadurch gekennzeichnet, dass** wenn genau einer der Eingangswerte P(X1), P(X2),... nicht gleich einem Nullelement ist, der Ausgangswert P(Y) bitweise genau gleich diesem Eingangswert ist.

6. Vorrichtung nach einem der vorangehenden Ansprüche, **dadurch gekennzeichnet, dass** die Logikschaltung herstellbar ist durch folgende Schritte
Aufstellen eines Boolean'schen Gleichungssystems, welches die Abhängigkeit beschreibt zwischen dem Wert P(Y) und den Werten P(X1), P(X2),... und
Umwandeln des Gleichungssystems mit einem Logiksynthese-Algorithmus in eine Gatteranordnung.

7. Vorrichtung nach einem der vorangehenden Ansprüche, **dadurch gekennzeichnet, dass** sie genau zwei Eingänge (I1, I2) für genau zwei PCM-Kodierte Werte P(X1) und P(X2) aufweist.

8. Verfahren zum Herstellen einer Vorrichtung nach einem der vorangehenden Ansprüche, **gekennzeichnet durch** folgende Schritte
Aufstellen eines Boolean'schen Gleichungssystems, welches die Abhängigkeit beschreibt zwischen dem Wert P(Y) und den Werten P(X1), P(X2),... und
Umwandeln des Gleichungssystems mit einem Logiksynthese-Algorithmus in eine Gatteranordnung.
